(19) Europäisches Patentamt
European Patent Office
Office européen des brevets

(11) **EP 0 922 788 B1**

(12) **EUROPEAN PATENT SPECIFICATION**

(45) Date of publication and mention
of the grant of the patent:
**09.03.2005 Bulletin 2005/10**

(51) Int Cl.$^7$: **C25B 9/00**, C02F 1/461

(21) Application number: **97942326.6**

(86) International application number:
**PCT/RU1997/000281**

(22) Date of filing: **12.09.1997**

(87) International publication number:
**WO 1998/040536 (17.09.1998 Gazette 1998/37)**

(54) **ELECTROCHEMICAL INSTALLATION**

ELEKTROCHEMISCHE EINRICHTUNG

INSTALLATION POUR OPERATION ELECTROCHIMIQUE

(84) Designated Contracting States:
**BE CH ES GB IE LI**

(30) Priority: **11.03.1997 RU 97103204**

(43) Date of publication of application:
**16.06.1999 Bulletin 1999/24**

(73) Proprietors:
• **Aquastel Holding Limited**
**10140 Tallinn (EE)**
Designated Contracting States:
**BE CH ES LI**
• **Medipure Limited**
**Waverton, Chester CH3 7PD (GB)**
Designated Contracting States:
**GB IE**

(72) Inventors:
• **NAIDA, Nikolai Nikolaevich**
**Moscow, 105275 (RU)**
• **PUSHNYAKOV, Nikolai Karpovich**
**St.Petersburg, 193076 (RU)**

(74) Representative: **Johnstone, Douglas Ian et al**
**Baron & Warren,**
**19 South End,**
**Kensington**
**London W8 5BU (GB)**

(56) References cited:
EP-A- 0 300 793          DE-A- 3 341 242
FR-A- 2 663 862          SU-A- 1 461 040
SU-A- 1 597 344          SU-A- 1 719 316
US-A- 3 964 991          US-A- 4 169 035

## Description

The invention falls into the field of chemical technology and in particular electrochemical processing of water solutions and gas production and can be used to clean and disinfect water, so as to manufacture disinfecting, sterilizing and cleaning solutions.

Coaxial activators exist wherein water solution to be processed flows downwards through valves in the upper part of the electrochemical activator. Electrochemically received anolyte and catholyte leave the activator by separate channels in the lower part of the activator (1). The disadvantage of this activator is the possibility of gas filled zones forming in the upper part of electrode chambers, resulting in considerable losses of electricity due to counter-flow of electrochemically obtained gases and electrolytes. Electrolysis units of potable water producing installations are known which are constructed of cylindrical elements, where water to be electrolyzed is supplied to both chambers in the lower part of the electrolysis unit, and the anolyte and catholyte received are removed separately from the upper parts of the electrolysis chambers (2). The disadvantage of this installation is high hydrodynamic resistance and the impossibility of creating independent circulation circuits of anolyte and catholyte. Installations for electrochemical water processing are known whose basic element is a coaxial electrolyzer with an input bush for separated input of solutions to anodic and cathodic chambers, and an output bush to remove separately the products of electrolysis. The bushes are located in the upper and lower parts of the installation respectively. The disadvantage of the installation is the complex structure, low turbulization of electrolyte flows in electrode chambers, and complicated removal of electrochemically received gases from the chambers.

The problem to be resolved by the present invention is improvement of the installation efficiency. The technical result that can be obtained if the invention is realized consists in simple construction of the electrochemical installation, achieved by creation of a spiral movement of electrolytes in the electrode chambers. This movement leads to turbulization of the electrolytes in the chambers of the installation, prolongs influence of electrolysis process over elementary amounts of the processed water solutions, simplifies removal of gaseous and liquid products of electrolysis and reduces possible formation of gas-filled zones in the upper points of electrode chambers. The electrochemical installation consists of vertical coaxial cylindrical and rod electrodes and a coaxial ion-exchange diaphragm, placed between them. Both electrodes and diaphragm are mounted in dielectric bushes. The space between the cylindrical electrode and the diaphragm, and between the diaphragm and the rod electrode form electrode chambers, have geometric dimensions which satisfy the following ratio:

$$0.65 \, \frac{D_B}{D_S} \leq \frac{K}{\ln(L)} \leq 25.00 \, \frac{D_B}{D_S}$$

$$0.60 \leq \frac{S_S}{S_B} \leq 1.50$$

where

    K - distance between electrodes, mm;

    L - length of working part of electrode chamber (distance between electrolyte input and output openings), mm

    $D_S$ - inner diameter of cylindric electrode, mm;

    $D_D$ - inner diameter of diaphragm, mm

$$D_D = 0.15 \div 0.8 \, D_S$$

    $D_B$ - diameter of rod electrode, mm

$$D_B = 0.10 \div 0.7 \, D_S$$

    $S_S$ and $S_B$ - areas of electrode chamber's transversal section of cylindric and rod electrodes respectively, $mm^2$.

In preferred embodiments of the invention the electrode chambers are hermetically sealed by rubber gaskets placed in the bushes under the diaphragm and cylindrical electrode, and rubber-sealing ring around the rod electrode. The section of the rod electrode is uniform along from the upper threading to the lower threading. The bush has a coaxial opening for the rod electrode and two hollow cylinders for installation of the ion exchange diaphragm and cylindrical electrode. The diameters of these hollow cylinders are not less than outer diameters of the diaphragm and cylindrical electrode respectively. The bush also has two pipe connections. The pipe connections, together with coaxial connection channels whose right-hand guide enters the electrode chambers tangentially to the inner generatrix of the base of corresponding cylinder at the angle $0°<\beta<90°$ form along with the opening in the guiding element, input and output spiral channels for electrolytes to enter and leave circulation circuits. The angle of elevation of the spiral guiding element is in the range $0°<\alpha<90°$. The width of the spiral guiding element correlates to the width of the electrode chamber, in the circulation circuit whereof it is installed in the bush. The diameters of the openings in the spiral guiding element and of the connection channel do not exceed the width of electrode chamber they have been designed for. In order to guarantee stable and effective spiral movement in the electrode chambers the pipe connections, connection channels and openings in the guiding element of the upper bush may be displaced from the pipe connections, connection channels and openings in the guiding element of the lower bush by

the angle $0°<\gamma<360°$ in plane. Introducing into the electrochemical installation bushes which, dye to inclined channels and spiral guiding elements, impart spiral movement to the electrolytes in electrode chambers, we receive a new characteristic, consisting in simple construction of the electrochemical installation, turbulization of the electrolytes in the chambers of the installation, prolonged influence of electrolysis process over elementary amounts of the processed water solutions, simple and effective removal of gaseous and liquid products of electrolysis from the installation. The helical motion results from the sum of translational, rotary and deformational motion. It characterizes vortex flow of liquid where the environment turbulization is realized by rotary and translational motion. Elevating the electroyte from bottom to top the rotary motion somehow reduces its value due to increased deformational motion. But at high speeds Re>2300 this reduction is little in the proposed electrochemical installation. The rotary motion allows a considerable increase in the period of electrolysis influence comparing to straight-line or similar motion of water solutions due to the spiral travel of the processed water solution along the anodic and cathodic chambers of the installation. Construction of the bushes containing the spiral guiding elements imparts the benefit of the rotary motion and facilitates electrolyte in-flow to the installation and removal of the products when the electrolysis is completed.

A preferred embodiment of the invention will now be described with reference to the accompanying drawings, wherein: .

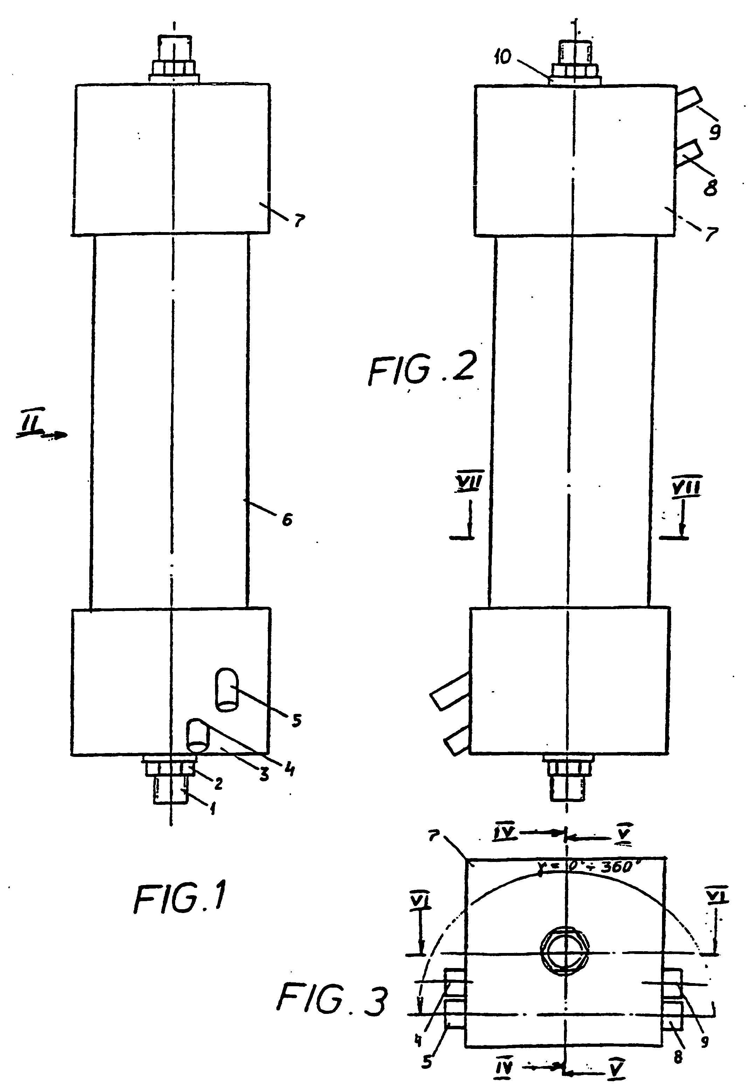

Figure 1 is a side elevation of an electrolysis unit according to the present invention;
Figure 2 is a side elevation in the direction of arrow II of figure 1;
Figure 3 is a top plan view of the unit of figures 1 and 2 ;

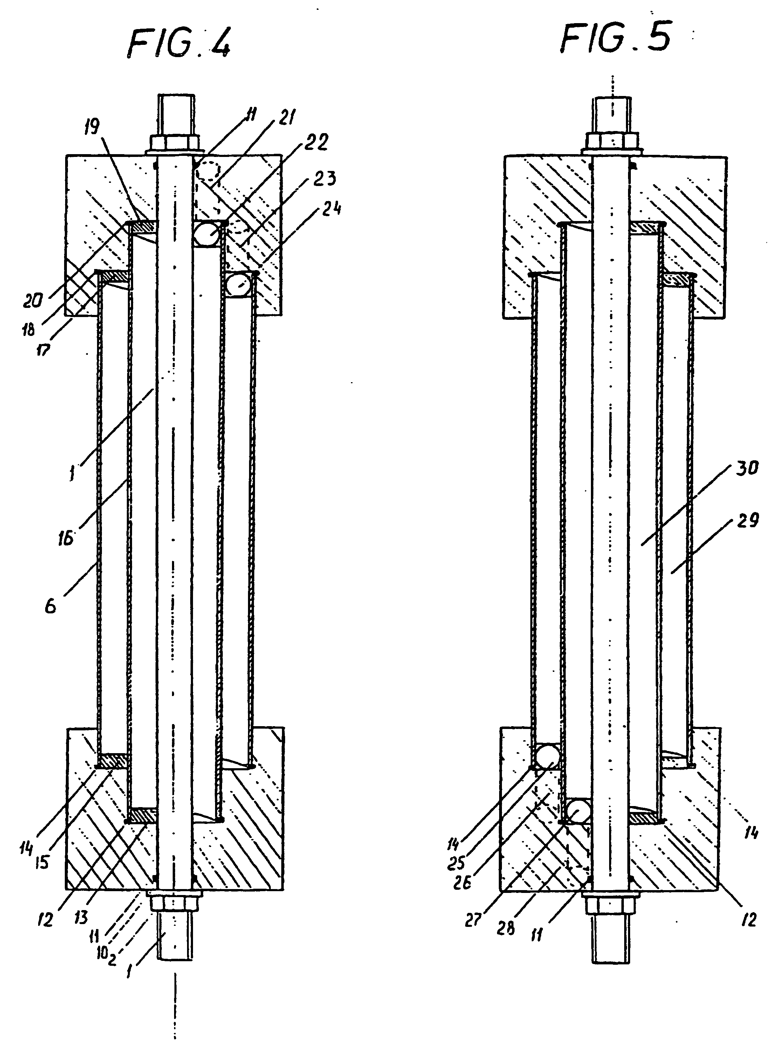

Figure 4 is a vertical cross section on the line IV to IV of figure 3;
Figure 5 is a vertical cross section on the line V to V of figure 3;

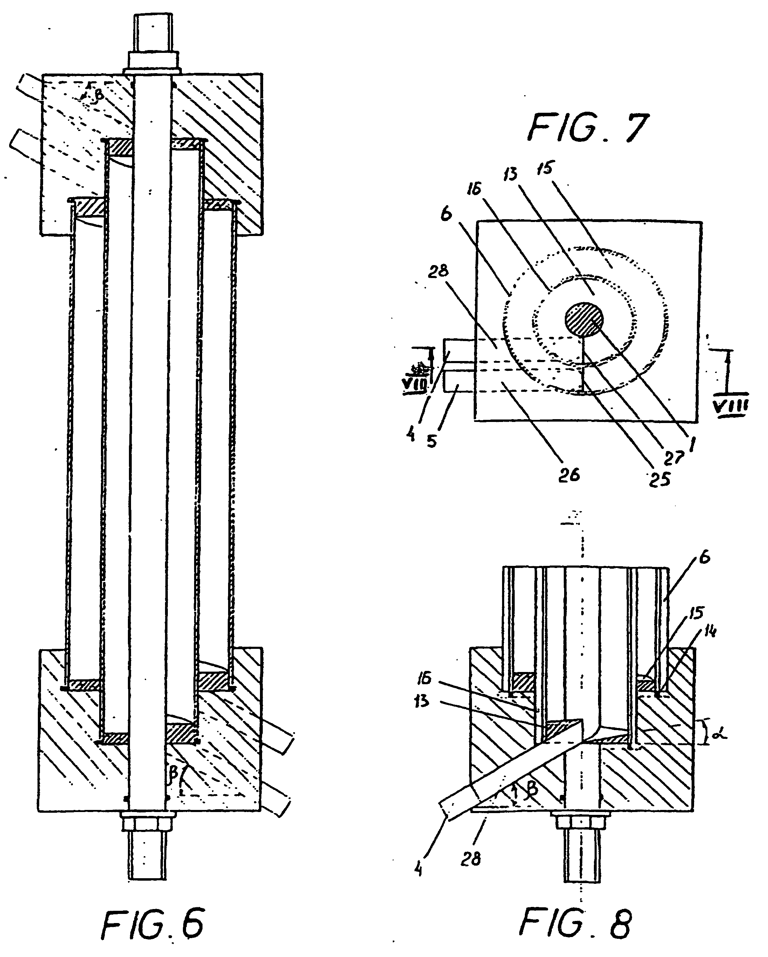

Figure 6 is a vertical cross section on the line VI to VI of figure 3;
Figure 7 is a horizontal cross section on the line VII to VII of figure 2; and
Figure 8 is a vertical cross section of the lower part of the unit, on the line VIII to VIII of figure 7.

The installation consists of a rod electrode 1 with threading in the upper and lower parts, allowing compact construction of the electrochemical installation and hermetically sealing it by circulation circuits of the electrode chambers with the gasket 10 and nut 2. The destination of both internal and external electrode chambers depends on the technology of water processing and may be switched to anodic or cathodic by changing of polarity. The circulation circuit of the outer electrode chamber includes the following way of electrolyte's movement: input connection pipe 5 in the lower bush 3; - connection channel 26, passing through the bush at an angle $\beta$ and entering the electrode chamber with its extreme right guide tangentially to the inner generatrix of the base of the larger cylinder; - opening 25 in the spiral guiding element 15; - bush outlet to the electrode chamber 29, made of the wall of cylindric electrode 6 and the wall of the ion exchange diaphragm 16; - inlet of the upper bush 7; - surface of the spiral guiding element 17; - opening 24 in the guiding element 17; - connection channel 23 passing the bush 7 at an angle $\beta$; - output connecting pipe of the electrolysis products 8. Circulation circuit of the inner electrode chamber includes the following way of electrolyte's movement : input connection pipe 4 in the lower bush 3; - connection channel 28, passing through the bush at an angle $\beta$ and entering the electrode chamber with its extreme right guide tangentially to the inner generatrix of the base of the smaller cylinder; - opening 27 in the spiral guiding element 13; - surface of the spiral guiding element 13; - bush outlet to the electrode chamber 30, made by the rod electrode 1 and the wall of the ion exchange diaphragm 16; - inlet of the upper bush 7; - surface of the spiral guiding element 19; - opening 22 in the guiding element 19; - connection channel 21 passing through the bush 7 at an angle $\beta$; - output connecting pipe of the electrolysis products 9. The electrode chambers are hermetically sealed with rubber gaskets 12, 14, 18, 20 placed under the ion exchange diaphragm 16 and the cylindric electrode 6, so as with sealing ring 11 around the rod electrode 1.

The components of the installation are designated in the drawings as follows:

1 - electrode with threading in the upper and lower parts; 2 - nut; 3 - lower bush; 4, 5 - input connection pipes of the lower bush; 6 - cylindric electrode; 7 - upper bush; 8, 9 - output connection pipe of the electrolysis products; 10 - gasket; 11 - sealing ring; 12, 14, 18, 20 - rubber gaskets; 13 - surface of the guiding element; 15 - surface of the guiding element; 16 - ion exchange diaphragm; 17 - guiding element; 19 - surface of the spiral guiding element; 21 - connection channel passing through the bush; 22 - opening; 23 - connection channel passing the bush 7 at an angle $\beta$; 24 - opening in the guiding element 17; 25 - opening in the spiral guiding element 13; 26 - connection channel passing the bush at an angle $\beta$; 27 - opening in the spiral guiding element 13; 28 - connection channel passing the bush at an angle $\beta$; 29, 30 - electrode chambers.

The crude solution enters the connection pipes 4 and 5 of the lower bush 3, where due to the spiral guiding elements 13 and 15 a screw motion is imparted the electrolyte. The motion persists in the chambers 30 and 29. After processing in the electrode chambers the electrochemically produced solutions and gases flow to the upper bush 7, where they are removed from corresponding chambers through the connecting pipes 8 and 9 by the screw motion.

The present invention can be used to purify and disinfect water, so as to produce disinfecting, sterilizing and cleaning solutions.

**REFERENCES CITED**

1. SU, Inventors certificate No 20511114, C02F 1/46, 1995.
2. Application of Japan No 63-8831, CO2F 1/46, 1988.
3. SU, Inventors certificate No 2042639, CO2F 1/46, 1995.
4. R.R. Chuguev. Hydraulics, Energoizdat, Leningrad, 1982, 78p.

**Claims**

1. An electrochemical plant comprising vertical coaxial cylindrical and core electrodes (6, 1) located in dielectric sleeves and, a membrane (16) coaxially arranged in said sleeves between said electrodes and dividing the space between electrodes into electrode chambers (29, 30), wherein said dielectric sleeves with a through inside hole for a core electrode (1), two hollow coaxial cylinders for the said membrane (16) and the said cylindrical electrode (6) are made with pipes (4, 5) and coaxial connecting channels (25, 27) entering said electrode chambers with their right edge guides tangentially to inner base elements of corresponding cylinders at an angler β in the range 0°<β<90°, are equipped with spiral guiding elements (13, 15), having in the lower part a hole extending the said connecting channel, to generate helical motion in said electrode chambers and to remove electrolysis products from upper parts of said electrode chambers separated from each other by the ion exchange membrane (16) so that geometric sizes of said electrode chambers fit the relations:

$$0.65 \frac{D_B}{D_S} \leq \frac{K}{\ln(L)} \leq 25,00 \frac{D_B}{D_S} ;$$

$$0.60 \leq \frac{S_S}{S_B} \leq 1.50 ;$$

where
   K - electrode spacing, mm;
   L - length of the electrode chamber working section (distance between holes of the electrolyte outlet and inlet to the chamber), mm;
   $D_S$- inner diameter of a cylindrical electrode, mm;
   $D_D$ - membrane inner diameter, mm;

$$D_D = 0.15 - 0.8 \, D_S$$

   $D_B$ - core electrode diameter, mm;

$$D_B = 0.10 - 0.7 \, D_S$$

   $s_s$ and $S_B$ - cross-section areas of electrode chambers of cylindrical and core electrodes, respectively, $mm^2$.

2. A plant according to claim 1, wherein the said core electrode (1) from a thread in its upper part to a thread in the lower part, is of uniform cross-section.

3. A plant according to claim 1 or claim 2, wherein the ion exchange membrane (16) and the cylindrical electrode (6) rest on rubber gaskets (12, 14, 15, 18) in said sleeves.

4. A plant according to any one of claims 1-3, wherein the slope of the spiral guiding element (13, 15) fits the relation 0° < α < 90° and the width of the spiral guiding element conforms to the width of the electrode chamber in whose circulation loop inside the sleeve this element is installed.

5. A plant according to any one of claims 1-4, wherein said pipes, said connecting channels and said holes in the guiding element of the upper sleeve can be shifted in plane from said pipes, said connecting canals and said holes in the guiding element of the lower sleeve by an angle satisfying the relation 0< γ < 360.

6. A plant according to any one of claims 1-5, wherein inside said sleeves diameters of hollow cylinders intended for the membrane (16) and the cylindrical electrode (6) are no less than outer diameters of the membrane and the cylindrical electrode, respectively.

7. A plant according to any one of claims 1-6, wherein inner diameters of the connecting canals in the sleeves and of the holes in the spiral guiding elements do not exceed the width of the electrode chambers they are intended for.

8. A plant according to any one of claims 1-7, wherein the connecting canals in the upper sleeve are made with different angles β of inlet to the electrode chambers.

## Patentansprüche

1. Elektrochemische Anlage umfassend vertikale koaxiale Zylinder- und Kernelektroden (6, 1), die sich in dielektrischen Ummantelungen befinden und eine Membran (16), die in genannten Ummantelungen zwischen genannten Elektroden koaxial angeordnet ist und den Raum zwischen Elektroden in Elektrodenkammern (29, 30) unterteilt, worin genannte dielektrische Ummantelungen mit einer durchgehenden Innenbohrung für eine Kernelektrode (1), zwei hohlen Koaxialzylindern für die genannte Membran (16) und die genannte Zylinderelektrode (6) hergestellt sind mit Rohren (4, 5) und koaxialen Verbindungskanälen (25, 27), die in genannte Elektrodenkammern mit ihren rechten Kantenführungen tangential zu den Innenbasiselementen von entsprechenden Zylindern bei einem Winkel, β, im Bereich von 0° < β < 90 ° eintreten, mit spiralförmigen Führungselementen (13, 15) ausgerüstet sind, die eine Bohrung im unteren Teil aufweisen, die den genannten Verbindungskanal verlängert, um eine Wendelbewegung in genannten Elektrodenkammern zu bewirken und um Elektrolyseprodukte aus den oberen Teilen von genannten Elektrodenkammern zu entfernen, die durch die Ionenaustauschmembran (16) dergestalt voneinander getrennt sind, dass die geometrischen Größen von genannten Elektrodenkammern den Beziehungen wie folgt entsprechen:

$$0,65 \, \frac{D_B}{D_S} \leq \frac{K}{\ln(L)} \leq 25,00 \, \frac{D_B}{D_S} \, ;$$

$$0,60 \leq \frac{S_S}{S_B} \leq 1.50 \, ;$$

worin

K - den Elektrodenabstand, mm;

L - die Länge des Arbeitsabschnitts der Elektrodenkammer (Distanz zwischen den Bohrungen des Elektrolytablaufs aus der und -zulaufs an die Kammer), mm;

$D_S$ - den Innendurchmesser einer Zylinderelektrode, mm;

$D_D$ - den Innendurchmesser der Membran, mm;

$$D_D = 0,15 - 0, 8 \, D_S$$

$D_B$ - den Durchmesser der Kernelektrode, mm;

$$D_B = 0,10 - 0,7 \, D_S$$

$S_S$ und $S_B$ - die Querschnittsflächen der Elektrodenkammern von Zylinder- bzw. Kernelektroden, mm², darstellen.

2. Anlage nach Anspruch 1, worin die genannte Kernelektrode (1) von einem Gewinde in ihrem oberen Teil bis zu einem Gewinde im unteren Teil einen gleichförmigen Querschnitt aufweist.

3. Anlage nach Anspruch 1 oder 2, worin die Ionenaustauschmembran (16) und die Zylinderelektrode (6) auf Gummidichtungen (12, 14, 15, 18) in genannten Ummantelungen ruhen.

4. Anlage nach einem der Ansprüche 1 - 3, worin die Neigung des spiralförmigen Führungselements (13, 15) der Beziehung 0° < α < 90 ° entspricht und die Breite des spiralförmigen Führungselements im Einklang mit der Breite der Elektrodenkammer steht, in deren Umlaufkreis im Inneren der Ummantelung dieses Element installiert ist.

5. Anlage nach einem der Ansprüche 1 - 4, worin genannte Rohre, genannte Verbindungskanäle und genannte Bohrungen im Führungselement der oberen Ummantelung in der Ebene von genannten Rohren verschoben werden können, wobei die genannten Verbindungskanäle und genannten Bohrungen im Führungselement der unteren Ummantelung durch einen Winkel der Beziehung 0 < γ < 360 genügen.

6. Anlage nach einem der Ansprüche 1 - 5, worin die Innenseite von genannten Ummantelungsdurchmessern der Hohlzylinder, die für die Membran (16) und die Zylinderelektrode (6) bestimmt sind, nicht weniger als die Außendurchmesser der Membran bzw. der Zylinderelektrode betragen.

7. Anlage nach einem der Ansprüche 1 - 6, worin die Innendurchmesser der Verbindungskanäle in den Ummantelungen und der Bohrungen in den spiralförmigen Führungselementen nicht die Breite der Elektrodenkammern, für die sie bestimmt sind, überschreiten.

8. Anlage nach einem der Ansprüche 1 - 7, worin die Verbindungskanäle in der oberen Ummantelung mit verschiedenen Winkeln, β, des Zulaufs an die Elektrodenkammern hergestellt sind.

## Revendications

1. Installation électrochimique comprenant des électrodes cylindrique et centrale coaxiales verticales (6, 1) situées dans des manchons diélectriques et une membrane (16) disposée coaxialement dans lesdits manchons entre lesdites électrodes et divisant l'espace entre les électrodes en chambres d'électrode (29, 30), dans lequel lesdits manchons diélectriques munis d'un trou intérieur traversant pour une électrode centrale (1), deux cylindres coaxiaux creux pour ladite membrane (16) et ladite électrode cylindrique (6) sont réalisés avec des tubes (4, 5) et des canaux de liaison coaxiaux (25, 27) entrant dans lesdites chambres d'électrode avec leurs guides de bord droit disposés tangentiellement aux éléments de base intérieurs des cylindres correspondants suivant un angle β compris dans la gamme de 0°<β<90°, sont équipés d'éléments de guidage en spirale (13, 15) ayant, dans la partie inférieure, un trou prolongeant ledit canal de liaison, pour générer un mouvement hélicoïdal dans lesdites chambres d'électrode et pour enlever les produits de l'électrolyse des parties supérieures desdites chambres d'électrode séparées l'une de l'autre par la membrane d'échange ionique (16) de telle sorte que les dimensions géométriques desdites chambres d'électrode soient conformes aux relations :

$$0{,}65 \, \frac{D_B}{D_S} \leq \frac{K}{\ln(L)} \leq 25{,}00 \, \frac{D_B}{D_S} \; ;$$

$$0{,}60 \leq \frac{S_S}{S_B} \leq 1.50 \; ;$$

où

K - espacement des électrodes, mm;

L - longueur de la section de travail de la chambre d'électrode (distance entre trous de la sortie d'électrolyte et de l'entrée dans la chambre), mm;

$D_S$ -diamètre intérieur d'une électrode cylindrique, mm;

$D_D$ -diamètre intérieur de la membrane, mm;

$$D_D = 0{,}15 - 0{,}8 \, D_S$$

$D_B$ -diamètre de l'électrode centrale, mm;

$$D_B = 0{,}10 - 0{,}7 \, D_S$$

$S_S$ et $S_B$ - sections transversales des chambres d'électrode des électrodes cylindrique et centrale, respectivement, mm$^2$.

2. Installation selon la revendication 1, dans laquelle ladite électrode centrale (1) a une section transversale uniforme d'un filetage situé dans sa partie supérieure à un filetage situé dans sa partie inférieure.

3. Installation selon la revendication 1 ou la revendication 2, dans laquelle la membrane d'échange ionique (16) et l'électrode cylindrique (6) reposent sur des joints en caoutchouc (12, 14, 15, 18) dans lesdits manchons.

4. Installation selon l'une quelconque des revendications 1-3, dans laquelle la pente de l'élément de guidage en spirale (13, 15) est conforme à la relation 0° < α < 90° et la largeur de l'élément de guidage en spirale est conforme à la largeur de la chambre d'électrode dans la boucle de circulation de laquelle cet élément est installé à l'intérieur du manchon.

5. Installation selon l'une quelconque des revendications 1-4, dans laquelle lesdits tubes, lesdits canaux de liaison et lesdits trous dans l'élément de guidage du manchon supérieur peuvent être déplacés dans un plan par rapport auxdits tubes, auxdits canaux de liaison et auxdits trous dans l'élément de guidage du manchon inférieur selon un angle satisfaisant la relation 0 < γ < 360.

6. Installation selon l'une quelconque des revendications 1-5 dans laquelle, à l'intérieur desdits manchons, les diamètres des cylindres creux prévus pour la membrane (16) et l'électrode cylindrique (6) ne sont pas inférieurs aux diamètres extérieurs de la membrane et de l'électrode cylindrique, respectivement.

7. Installation selon l'une quelconque des revendications 1-6, dans laquelle les diamètres intérieurs des canaux de liaison dans les manchons et des trous dans les éléments de guidage en spirale ne dépassent pas la largeur des chambres d'électrode pour lesquelles ils sont prévus.

8. Installation selon l'une quelconque des revendications 1-7, dans laquelle les canaux de liaison dans le manchon supérieur sont réalisés avec différents angles β d'entrée aux chambres d'électrode.

FIG.1

FIG.2

FIG.3

# FIG.4

# FIG.5

FIG. 7

FIG. 6

FIG. 8